# EUROPEAN PATENT APPLICATION

(11) **EP 1 273 944 A1**
(43) Date of publication of application: **08.01.2003**
(21) Application number: 02078293.4
(22) Date of filing: 02.07.2002
(51) Int. Cl.: G02B 6/38

(54) **Optical connector plug**

(30) Priority: 02.07.2001 NL 1018440
(71) Applicant: FCI, 75009 Paris (FR)
(72) Inventor: van der Steen. Hendrikus Petrus Gijsbertus, 5275 BW Den Dungen (NL)
(74) Representative: Aalbers, Arnt Reinier

(57) **Abstract**

The invention pertains to an optical connector plug, such as a Multi-fibre Push On (MPO) connector (1), at least comprising a shell (2) accommodating a plurality of ferrules (9) which contains one or more optical fibres (11). By placing a plurality of such ferrules (9) in a joint shell (2), the density of plugs and optical fibre cables can be increased without increasing the (standardised) pitch of the connectors in which the plugs are to be placed.

## Description

The invention pertains to an optical connector plug, such as a Multi-fibre Push On (MPO) connector plug, at least comprising a shell accommodating a ferrule which contains one or more optical fibres. The invention further pertains to a shell suitable for use in the said MPO connector plug and to a backpanel connector system comprising a backpanel connector and a board connector for receiving MPO connector plugs.

Optical connector plugs of this type are known in the art, e.g. from European patent application 0 807 837. This publication is directed to a backpanel connector system comprising a backpanel connector (numeral 1 in figures 1 to 3 of that publication) and a board connector (2), which are used to connect two or more MPO connector plugs (3). The back panel connector (1) comprises a first housing (5) within which a second housing (12) is mounted. The second housing (12) is slidable in a z-direction extending perpendicular to the bottom of the first housing (5), and hence to the backplane, and has some freedom of movement in the x- and y- directions. This freedom of movement of the housing (12), also referred to as "floating insert", is very important in coupling two connector plugs (3), inserted in respectively the backpanel connector (1) and board connector (2), in a correct manner.

The mentioned MPO plugs are used in many applications and in such numbers that, *inter alia*, the dimensions of certain parts of the plugs and of the backpanel and board connectors have been standardised. In particular, the pitch of the backplane and board connectors is fixed at 12 mm for connectors designed to receive a single plug and at from 20 to 25 mm for duplex configurations, i.e. for connectors designed to receive two plugs.

It is an object of the present invention to increase the density of optical connections on, e.g., a backplane.

To this end, the optical connector according to the opening paragraph is characterised in that the shell accommodates a plurality of such ferrules.

It was found that more than one ferrule can be fitted in a single shell without exceeding the standardised pitch of corresponding connectors.

E.g. two ferrules can be fitted in a single shell without exceeding the standardised 12 mm pitch of backplane and board connectors designed to receive a single plug. Thus, the density of optical connections can be increased considerably and, in this particular example, even be doubled.

It is preferred that the shell comprises a plurality of cavities, which are separated by a corresponding number of internal walls and each of which accommodates one of the said ferrules. Such a configuration enables effective integration of two or more ferrules in a single sleeve whilst maintaining structural stability.

The invention will now be explained in more detail with reference to the drawings in which a preferred embodiment of the present invention is shown in detail.

Figures 1A to 1D show respectively a perspective and a front view as well as two cross-sections of a connector plug according to the present invention.

Figure 2 shows an exploded view of a backpanel connector system according to the present invention.

Figure 3 show the backpanel connector system according to figure 2 in an assembled state.

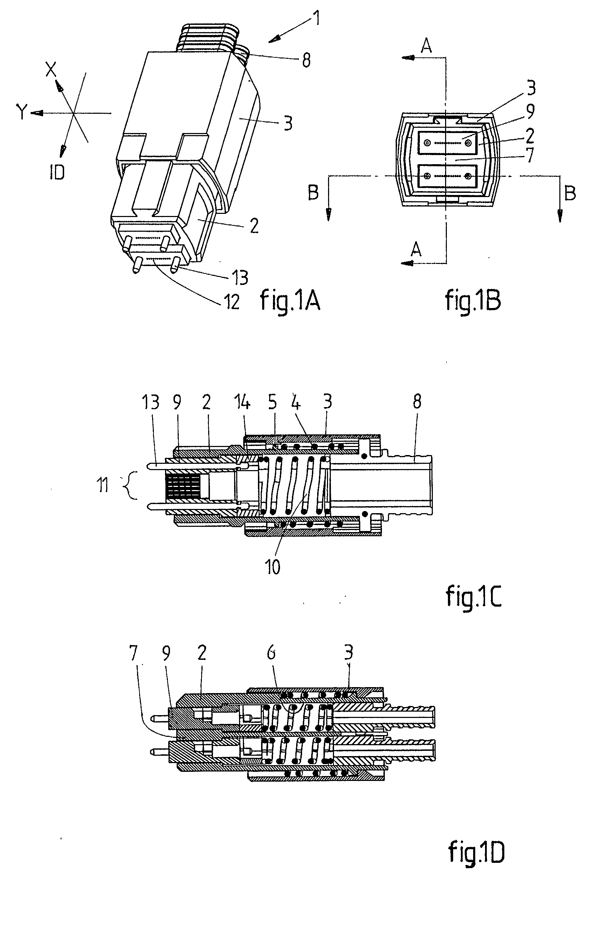

Figures 1A to 1D show an optical connector plug, in this case an MPO plug 1 comprising a shell 2 which is surrounded by a sleeve 3. The sleeve 3 is biased in a forward direction, i.e. in the insertion (ID) or z-direction indicated in figure 1A, by means of a coiled spring 4 that is positioned between first ribs 5 on the outer surface of the shell 2 and second ribs (not shown) on the inner surface of the sleeve 3.

The shell 2 comprises two longitudinal cavities 6 separated by an internal wall 7 and each accommodating a guide 8, in this particular embodiment a so-called rear outer shell, for an optical fibre cable (not shown), which is firmly locked inside the rear end of the shell 2. A so-called Mechanically Transferable (MT) ferrule 9 is slidably mounted in each of the cavities 6 and both ferrules 9 extend from the front face of the shell 2. A spring 10, having rectangular windings with an outer circumference substantially identical to that of the rear end of the ferrule 9, is positioned between the said rear end and the front end of the guide 8, thus biasing the ferrule 9 in the insertion direction ID of the plug 1.

An array 11 of, e.g. twelve, optical fibres is embedded in each of the ferrules 9 and the ends 12 of the optical fibres are flush with the front surface of the respective ferrule 9. Each of the ferrules 9 is provided with two alignment pins 13, one on either side of the array 11 and parallel to each other as well as to the array 11, i.e. extending in the insertion direction ID. The alignment pins 13 facilitate the connecting of the plug 1 to a counterpart which is provided with alignment holes that are complementary to the pins 13. Further, the pins 3 are mounted in a pin clamp 14 abutting the rear of the ferrule 9.

The internal wall 7, which separates the cavities 6, provides, in the lateral or x-direction, i.e. in a direction perpendicular to the insertion direction ID as well as to the plane of respective arrays 11, sufficient space between the subassemblies of ferrules 9, spring 10, and guides 8 to be able to use subassemblies identical to those used in existing MPO plugs accommodating a single ferrule 9. In other words, the shell 2 according to the present invention can be used in conjunction with commercially available components. Alternatively, the width of the coiled spring 10 can be reduced by selecting a wire with a smaller diameter and preferably fewer windings and an increased pitch between the windings to compensate for the reduced stiffness of the wire itself.

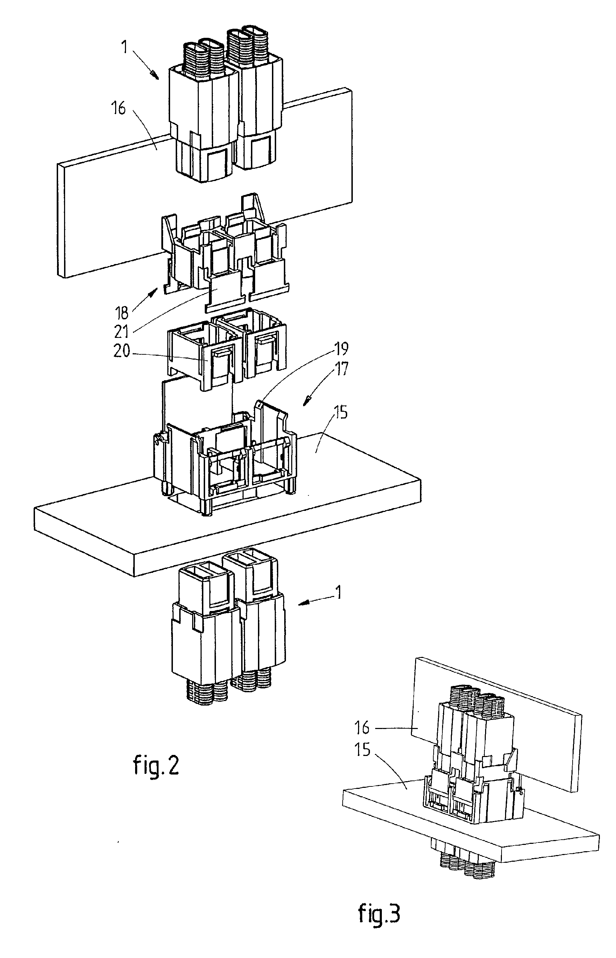

Figures 2 and 3 show a backpanel connector system comprising a backpanel 15 and a printed circuit board 16 each provided with a connector 17 respectively 18. The backpanel connector 17 comprises a first housing 19, the bottom part of which has an opening that is in register with a corresponding opening in the backpanel 15 for receiving two receptacle plugs similar to the header plug shown in figures 1A to 1D.

A second housing or floating insert 20 is fitted inside the first housing 19. The board connector 19 comprises a third housing 21, which is also fitted into the first housing 19. The connectors plugs according to the present invention can be connected to and used in conjunction with existing backpanel connector systems, e.g. the system known from e.g. from EP 0 807 837 A1 mentioned above. However, the dimensions of the openings in the floating insert and in the board connector for receiving the plugs will in principal have to be adapted to the dimensions of the shells and sleeves of the plugs.

Figure 3, which shows the backplane system according to figure 2 in an assembled state, clearly demonstrates that a system, which would normally provide optical coupling between the optical fibres in four plugs and thus cables, now provides coupling between eight plugs without increasing the pitch of the backplane and board connectors.

The invention is not restricted to the above described embodiments which can be varied in a number of ways within the scope of the claims. For instance, the shell can accommodate e.g. four or five ferrules in a duplex configuration.

## Claims

1. Optical connector plug, such as a Multi-fibre Push On (MPO) connector (1), at least comprising a shell (2) accommodating a ferrule (9) which contains one or more optical fibres (11), **characterised in that** the shell (2) accommodates a plurality of such ferrules (9).

2. Optical connector plug according to claim 1, wherein the shell (2) comprises a plurality of cavities (6), which are separated by a corresponding number of internal walls (7) and each of which accommodates one of the said ferrules (9).

3. Optical connector plug according to claim 1 or 2, wherein the shell (2) accommodates exactly two ferrules (9).

4. Optical connector plug according to any one of the preceding claims, wherein each of the ferrules (9) is part of a an individual subassembly (9, 10, 8) which further comprises a spring (10) comprising coiled wire and wherein the width of the spring (10) has been reduced by selecting a wire with a smaller diameter.

5. Optical connector plug according to any one of the preceding claims, wherein the shell (2) is fitted inside a coupling sleeve (3) and wherein the width of the sleeve (3) in the x-direction is equal to or less than the number of ferrules multiplied by 6 mm.

6. Shell (2) suitable for use in a Multi-fibre Push On connector plug (1) comprising a plurality, preferably two, cavities (6) for receiving a ferrule (9) containing one or more optical fibres (11) and wherein the cavities (6) are separated by a corresponding number of internal walls (7), preferably one internal wall (7).

7. Backpanel connector system comprising a backpanel connector (17) and a board connector (18), wherein at least one of the said connectors (17, 18) is adapted for receiving an optical connector plug according to any one of the preceding claims.

8. Backplane connector system according to claim 7, wherein the backpanel connector (17) comprises a first housing (19) and a second housing (20) movably fitted inside the first housing (19), the board connector (18) comprises a third housing (21), which is also fitted into the first housing (19), and wherein the second and third housings (20, 21) are adapted to receive the said optical connector plug.
